(19) **Europäisches Patentamt European Patent Office Office européen des brevets**

(11) **EP 4 667 241 A1**

(12) **EUROPEAN PATENT APPLICATION**
published in accordance with Art. 153(4) EPC

(43) Date of publication:
24.12.2025 Bulletin 2025/52

(21) Application number: 24779513.1

(22) Date of filing: 14.03.2024

(51) International Patent Classification (IPC):
*B60C 19/00* (2006.01)    *B60C 1/00* (2006.01)
*H04B 1/59* (2006.01)

(52) Cooperative Patent Classification (CPC):
**B60C 1/00; B60C 19/00; H04B 1/59**

(86) International application number:
**PCT/JP2024/009963**

(87) International publication number:
**WO 2024/203384 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023053358**

(71) Applicant: **The Yokohama Rubber Co., Ltd.
Hiratsuka-shi, Kanagawa 254-8601 (JP)**

(72) Inventor: **SHIBATA, Hirokazu
Hiratsuka-shi, Kanagawa 254-8601 (JP)**

(74) Representative: **Dilg, Haeusler, Schindelmann
Patentanwaltsgesellschaft mbH
Leonrodstraße 58
80636 München (DE)**

(54) **LAMINATE FOR TIRE**

(57)    Provided is a multilayer structure for a tire excellent in both the communication performance of an embedded transponder and the durability of the multilayer structure. The above problem is solved by providing a multilayer structure for a tire including a transponder, a coating rubber layer that coats the transponder, and an adjacent rubber layer layered adjacent to at least one surface of the coating rubber layer, the transponder having an IC board and antennas provided at both end portions of the IC board, a linear distance between terminals of the antennas provided at both end portions of the IC board being 30 mm or more and 60 mm or less, the coating rubber layer containing a rubber component, carbon black, calcium carbonate, and oil, and containing 1 to 15 parts by mass of the carbon black and 1 to 80 parts by mass of the calcium carbonate with respect to 100 parts by mass of the rubber component, and an oil extraction amount of the coating rubber layer and an oil extraction amount of the adjacent rubber layer satisfying a predetermined relationship.

FIG. 1

EP 4 667 241 A1

**Description**

Technical Field

The present invention relates to a multilayer structure for a tire in which a transponder is coated and embedded, and a tire including the multilayer structure for a tire.

Background Art

It has been proposed to embed a transponder inside a multilayer structure for a tire for the purpose of identification, management, and the like during manufacture, distribution, use, and the like of tires. For example, Patent Document 1 discloses a pneumatic tire in which a pair of sidewall portions and a crown portion are arranged in a toroidal shape between a pair of bead portions, in which both end portions of an innerliner rubber layer and a chafer rubber layer constituting a rubber layer on a tire inner circumferential surface side in the bead portion are overlapped with each other, an end portion of the chafer rubber layer is arranged to cover an end portion of the innerliner rubber layer, and a transponder is embedded between the innerliner rubber layer and the chafer rubber layer in an orientation in which an axis of the transponder is along a circumferential direction of the tire.

Citation List

Patent Literature

Patent Document 1: JP H7-137510 A

Summary of Invention

Technical Problem

Here, the communication performance of the transponder embedded inside the multilayer structure for a tire is greatly affected by the electrical resistance (particularly, the blended amount of carbon black) of the rubber layer coating the transponder. For example, the lower the blended amount of carbon black in the rubber layer coating the transponder, the better the communication performance of the coated transponder. On the other hand, the blended amount of carbon black in the rubber layer coating the transponder and the like affect the durability of not only the rubber layer but also the entire multilayer structure for a tire constituting the tire. For example, the greater the blended amount of carbon black in the rubber layer coating the transponder, the better the durability of the multilayer structure. That is, the communication performance of the transponder and the durability of the multilayer structure are generally in a trade-off relationship, and there is a problem in terms of obtaining a multilayer structure for a tire or the like having excellent communication performance and durability.

Accordingly, an object of the present invention is to provide a multilayer structure for a tire which is excellent in both the communication performance of an embedded transponder and the durability of the multilayer structure.

Solution to Problem

In order to solve the above problem, the present inventors have conducted extensive research and have found that a multilayer structure for a tire including a transponder; a coating rubber layer that coats the transponder; and an adjacent rubber layer layered adjacent to at least one surface of the coating rubber layer, the transponder including an IC board and antennas provided at both end portions of the IC board, a linear distance between terminals of the antennas provided at both end portions of the IC board being 30 mm or more and 60 mm or less, the coating rubber layer containing a rubber component, carbon black, calcium carbonate, and oil, and containing 1 to 15 parts by mass of the carbon black and 1 to 80 parts by mass of the calcium carbonate per 100 parts by mass of the rubber component, and an oil extraction amount of the coating rubber layer and an oil extraction amount of the adjacent rubber layer satisfying a predetermined relationship, has excellent communication performance of the transponder and excellent durability of the multilayer structure, thereby completing the present invention.

That is, the present invention includes the following embodiments <1> to <12>.

<1> A multilayer structure for a tire including: a transponder; a coating rubber layer that coats the transponder; and an adjacent rubber layer layered adjacent to at least one surface of the coating rubber layer, the transponder including an IC board and antennas provided at both end portions of the IC board, a linear distance between terminals of the antennas provided at both end portions of the IC board being 30 mm or more and 60 mm or less, the coating rubber layer containing a rubber component, carbon black, calcium carbonate, and oil, and containing 1 to 15 parts by mass of the carbon black and 1 to 80 parts by mass of the calcium carbonate per 100 parts by mass of the rubber component, and an oil extraction amount (O1) of the coating rubber layer and an oil extraction amount (O2) of the adjacent rubber layer satisfying a relationship of Formula (1).

$$(1)\ 0.5 \leq O1/O2 \leq 2.0$$

<2> The multilayer structure for a tire according to <1>, in which the calcium carbonate contained in the coating rubber layer is light calcium carbonate or calcium carbonate surface-treated with a fatty acid metal salt, more preferably light calcium carbonate surface-treated with a fatty acid metal salt.

<3> The multilayer structure for a tire according to <1> or <2>, in which the coating rubber layer contains 5 to 15 parts by mass of the carbon black per 100 parts by mass of the rubber component.

<4> The multilayer structure for a tire according to any one of <1> to <3>, in which the carbon black contained in the coating rubber layer is carbon black having a nitrogen adsorption specific surface area ($N_2SA$) of 20 to 50 $m^2$/g and a DBP absorption amount of less than 100 mL/100 g, more preferably carbon black having a nitrogen adsorption specific surface area ($N_2SA$) of 25 to 40 $m^2$/g and a DBP absorption amount of less than 90 mL/100 g.

<5> The multilayer structure for a tire according to any one of <1> to <4>, in which a mass ratio (carbon black/calcium carbonate) of the carbon black to the calcium carbonate in the coating rubber layer is more than 0.05, more preferably 0.10 to 5.0, even more preferably 0.10 to 2.0, even more preferably 0.15 to 1.5, and even more preferably 0.15 to less than 1.0.

<6> The multilayer structure for a tire according to any one of <1> to <5>, in which the coating rubber layer contains 5 to 70 parts by mass of the calcium carbonate, more preferably 10 to 60 parts by mass, and even more preferably 30 to 60 parts by mass, per 100 parts by mass of the rubber component.

<7> The multilayer structure for a tire according to any one of <1> to <6>, in which the oil extraction amount (O1) of the coating rubber layer and the oil extraction amount (O2) of the adjacent rubber layer satisfy a relational expression of $0.8 \leq O1/O2 \leq 1.8$, or even $1.0 \leq O1/O2 \leq 1.6$.

<8> The multilayer structure for a tire according to any one of <1> to <7>, in which the rubber component of the coating rubber layer includes natural rubber (NR) and/or styrene-butadiene copolymer rubber (SBR).

<9> The multilayer structure for a tire according to any one of <1> to <8>, in which the coating rubber layer includes 1 to 30 parts by mass, more preferably 5 to 20 parts by mass, and even more preferably 5 to 10 parts by mass of the oil per 100 parts by mass of the rubber component.

<10> The multilayer structure for a tire according to any one of <1> to <9>, in which the adjacent rubber layer includes 1 to 30 parts by mass, more preferably 5 to 20 parts by mass, and even more preferably 5 to 15 parts by mass of oil per 100 parts by mass of the rubber component included in the adjacent rubber layer.

<11> The multilayer structure for a tire according to any one of <1> to <10>, in which a layer thickness of the coating rubber layer in a region coating the transponder is 0.3 to 1.5 mm.

<12> A tire including the multilayer structure for a tire according to any one of <1> to <11>.

Advantageous Effects of Invention

According to the present invention, a multilayer structure for a tire excellent in both the communication performance of an embedded transponder and the durability of the multilayer structure can be obtained.

Brief Description of Drawings

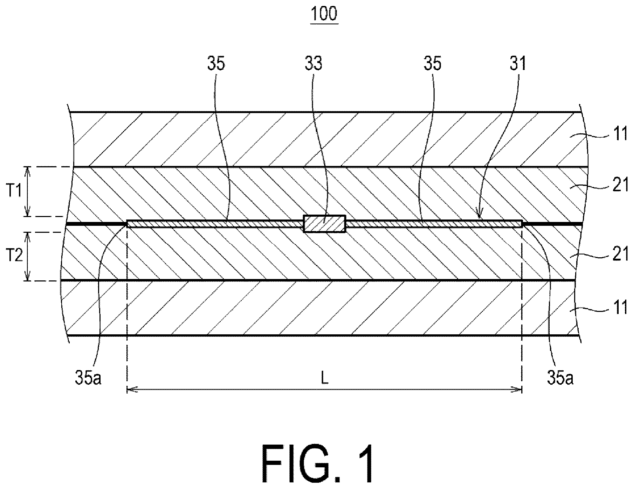

FIG. 1 is a partial cross-sectional schematic view that represents an example of an embodiment of a multilayer structure for a tire according to the present invention.

Description of Embodiments

Embodiments of the present invention will be described below.

The present invention relates to a multilayer structure for a tire comprising a transponder, a coating rubber layer coating the transponder, and an adjacent rubber layer layered adjacent to at least one surface of the coating rubber layer, the transponder including an IC board and an antenna provided at both end portions of the IC board, and the linear distance between the terminals of the antennas provided at both end portions of the IC board is 30 mm to 60 mm, the coating rubber layer contains a rubber component, carbon black, calcium carbonate, and oil, and contains 1 to 15 parts by mass of the carbon black and 1 to 80 parts by mass of the calcium carbonate per 100 parts by mass of the rubber component, and the oil extraction amount of the coating rubber layer and the oil extraction amount of the adjacent rubber layer satisfy a predetermined relationship, and a tire including the multilayer structure for a tire. Hereinafter, these are also referred to as the "multilayer structure for a tire of the present invention" and the "tire of the present invention".

Note that in the present invention, unless otherwise specified, value ranges indicated using "from ... to ..." or "of ... to ..." mean value ranges in which the value before "to" is a lower limit and the value after "to" is an upper limit.

Hereinafter, the configuration, the components, the contents thereof, and the like of the multilayer structure for a tire of the present invention will be described in detail with reference to the drawings. Note that the dimensional ratios (length, thickness, and the like) and orientations of the members and the like shown in the drawings may differ from the actual dimensional ratios and orientations in order to facilitate understanding of the invention.

Transponder

The multilayer structure for a tire of the present invention is a multilayer structure for a tire including a rubber layer and a transponder. The transponder is coated with a coating rubber layer described later and embedded in the multilayer structure. Here, the "transponder" means a device or an apparatus for transmitting and receiving data in a non-contact manner.

The transponder in the multilayer structure for a tire of the present invention has an IC board for storing data, and antennas provided at both end portions of the IC board for transmitting and receiving data in a non-contact manner, and a linear distance between the terminals of the antennas provided at both end portions of the IC board is 30 mm or more and 60 mm or less. Here, "both end portions of the IC board" refer to both end portions in a longitudinal direction of the IC board. As a result (particularly, since the linear distance between the terminals of the antennas coated with a predetermined coating rubber layer is within a predetermined range), the transponder has high communication performance in a state of being embedded in the multilayer structure for a tire of the present invention. Therefore, by using this, information relating to the tire can be accurately written or read, and identification, management, and the like can be performed during manufacture, distribution, use, and the like of tires.

As the transponder, for example, a radio frequency identification (RFID) tag can be used. Here, "RFID" refers to an automatic recognition technology including: a reader/writer including an antenna and a controller; and an ID tag including an IC board and an antenna, the automatic recognition technology allowing data to be communicated in a wireless manner.

The overall shape of the transponder is not limited to particular shapes and can use a pillar- or plate-like shape, for example. Also, at least one of the antennas may be bent or curved. In particular, using the transponder 31 having a pillar-like shape illustrated in FIG. 1 can suitably follow the deformation of the tire in each direction. In the case of this embodiment, the antenna 35 of the transponder 31 is provided so as to protrude from each of both end portions of the IC board 33 and has a spiral shape. This allows the transponder to follow deformation of the tire during travel, improving the durability of the transponder.

Furthermore, the communication performance can be further enhanced by appropriately changing the linear distance between the terminals of the antenna within a predetermined range. The same applies to the length of the antenna itself.

For example, the linear distance between the terminals of the antennas described above is more preferably 35 mm or more, even more preferably 40 mm or more, even more preferably 45 mm or more, and even more preferably 50 mm or more. Here, the "linear distance between the terminals of the antennas" is a distance (length) when the terminals (terminals not connected to the IC board) of the antennas provided at both end portions of the IC board are connected by a straight line. In the embodiment of FIG. 1, the length is a distance (length L) of the straight line connecting the respective terminals 35a of the antenna 35.

Coating Rubber Layer

The multilayer structure for a tire of the present invention further includes a coating rubber layer that coats the transponder described above. Here, "coating the transponder" means that the transponder is entirely surrounded and coated so as not to be exposed (the transponder is entirely coated and layered so that both the front and back surfaces of the transponder are sandwiched). For example, as shown in FIG. 1, an embodiment in which the transponder 31 is coated and layered so as to be sandwiched between two coating rubber layers 21 is exemplified. An adhesive may be used for layering and bonding the coating rubber layers. In other words, an adhesive layer made of an adhesive may be disposed between the two coating rubber layers. Note that FIG. 1 is a partial cross-sectional view (schematic view), and it does not indicate that the side surface of the transponder 31 is exposed; rather, In this embodiment as well, the entire transponder 31 is coated with the coating rubber layer 21. Therefore, the transponder is thus embedded in the multilayer structure for a tire of the present invention by being coated with the coating rubber layer.

The coating rubber layer contains a rubber component, carbon black, calcium carbonate, and oil. The details of these will be described below.

Rubber Component

The rubber component contained in the coating rubber layer is not particularly limited, and any known rubber component used in applications such as tires can be used. Although not limited, from the viewpoint of forming a multilayer structure for a tire, it is preferable that the rubber component contains a diene rubber, which is a rubber component having a double bond in the polymer main chain, and it is even more preferable that the rubber component is composed of a diene rubber. Examples of the diene rubber include natural rubber (NR), butadiene rubber (BR), styrene-butadiene copolymer rubber (styrene butadiene rubber, SBR), acrylonitrile-butadiene copolymer rubber (nitrile rubber, NBR), chloroprene rubber (CR), synthetic isoprene rubber (IR), styrene-isoprene copolymer rubber, isoprene-butadiene copolymer rubber, and styrene-butadiene-vinylpyridine terpolymer (VP). It is particularly preferable that the rubber component contained in this coating rubber layer contains NR or SBR.

However, it is also possible to use or combine rubber components other than diene rubber, such as olefin rubber (ethylene propylene rubber, acrylic rubber, and the like), fluororubber, and silicone rubber.

The weight average molecular weight of the diene rubber is preferably 50,000 to 3,000,000, and more preferably 100,000 to 2,000,000. Furthermore, any of the diene rubbers described above may be terminal-modified with an amino group, an amide group, a silyl group, an alkoxysilyl group, a carboxy group, a hydroxy group, or the like, or may be epoxidized.

Here, in the present invention, the "weight average molecular weight" refers to a value measured in terms of standard polystyrene by gel permeation chromatography (GPC) using tetrahydrofuran as a solvent. The GPC measurement is performed at 40°C using a column (MIXED-B, available from Polymer Laboratories) as a measuring instrument.

Carbon Black

The carbon black contained in this coating rubber layer is also not particularly limited, and any known carbon black used in applications such as tires can be used. For example, specific examples of carbon black that can be used include various grades such as SAF-HS, SAF, ISAF-HS, ISAF, ISAF-LS, IISAF-HS, HAF-HS, HAF, HAF-LS, FEF, GPF, SRF, FT, and MT. The carbon black may be used alone or in combination of two or more types. The nitrogen adsorption specific surface area ($N_2SA$) of the carbon black is preferably 20 to 50 $m^2/g$, and more preferably 25 to 40 $m^2/g$, since the effects of the present invention are more easily achieved. The DBP absorption amount of the carbon black is preferably less than 100 mL/100 g, and more preferably less than 90 mL/100 g, since the effects of the present invention are more easily achieved. In particular, it is more preferable that the carbon black contained in the coating rubber layer has a nitrogen adsorption specific surface area ($N_2SA$) of 20 to 50 $m^2/g$ and a DBP absorption amount of less than 100 mL/100 g.

Note that this "carbon black" refers to carbon fine particles with a diameter of about 3 to 500 nm, which are manufactured under industrial quality control, and the average particle size (the arithmetic mean value of the diameters of the particles photographed with an electron microscope) is more preferably 25 to 250 $\mu$m, and even more preferably 35 to 100 $\mu$m. The nitrogen adsorption specific surface area ($N_2SA$) of the carbon black is a value measured according to JIS K6217-2:2017. The DBP absorption amount of the carbon black is a value measured according to JIS K6217-4:2017.

The coating rubber layer contains 1 to 15 parts by mass of carbon black per 100 parts by mass of the rubber component contained in the coating rubber layer. The amount of carbon black is more preferably 5 parts by mass or more per 100 parts by mass of the rubber component, and may be more than 5 parts by mass. If the amount of carbon black is less than 1 part by mass per 100 parts by mass of the rubber component, the durability of the multilayer structure for a tire of the present invention will be deteriorated, which is not preferable. If the amount of carbon black is more than 15 parts by mass per 100 parts by mass of the rubber component, the communication performance of the transponder cannot be improved, which is not preferable.

Calcium Carbonate

The calcium carbonate contained in the coating rubber layer is also not particularly limited, and any known calcium carbonate used for applications such as tires can be used. For example, specific examples of calcium carbonate include light calcium carbonate, heavy calcium carbonate, precipitated calcium carbonate, and surface-treated calcium carbonate. The calcium carbonate may be used alone or in combination of two or more types. The calcium carbonate is more preferably light calcium carbonate or surface-treated calcium carbonate, since the effects of the present invention are more easily achieved. In particular, calcium carbonate surface-treated with a fatty acid metal salt (particularly, light calcium carbonate surface-treated with a fatty acid metal salt) is more preferable, since the dispersibility in the rubber component and the like are improved and the effects of the present invention are more easily achieved.

The "surface-treated calcium carbonate" is calcium carbonate whose surface (particle surface) is treated with another component, whereby the other component reacts with or is adsorbed on the surface. The "calcium carbonate surface-treated with a fatty acid metal salt" is calcium carbonate whose surface (particle surface) is treated with a fatty acid metal salt, whereby the fatty acid metal salt reacts with or is adsorbed on the surface.

Examples of fatty acid metal salts include saturated fatty acid salts such as potassium laurate, potassium myristate, potassium palmitate, sodium palmitate, barium stearate, calcium stearate, zinc stearate, potassium stearate, cobalt (II) stearate, tin (IV) stearate, sodium stearate, and lead (II) stearate; and unsaturated fatty acid salts such as zinc oleate, potassium oleate, cobalt (II) oleate, sodium oleate, and potassium oleate diethanolamine salt. These may be used alone for surface treatment, or two or more may be used in combination. Among these, metal salts (soaps) of mixed acids mainly composed of stearic acid and palmitic acid are preferred in terms of reactivity with calcium carbonate particles, particle stability, dispersibility, ease of availability, cost, and the like.

The coating rubber layer contains 1 to 80 parts by mass of this calcium carbonate together with the above-mentioned carbon black per 100 parts by mass of the rubber component contained in the coating rubber layer. Furthermore, the amount of this calcium carbonate is more preferably 5 parts by mass or more per 100 parts by mass of the above-mentioned rubber component, more preferably 10 parts by mass or more, even more preferably 30 parts by mass or more, and even more preferably more than 55 parts by mass. The upper limit may be 70 parts by mass or less, or 60 parts by mass or less. This allows the communication performance of the embedded transponder and the durability of the multilayer structure to be improved by a synergistic effect with the above-mentioned predetermined amount of carbon black. If the amount of this calcium carbonate is less than 1 part by mass per 100 parts by mass of the above-mentioned rubber component, the durability of the multilayer structure for a tire of the present invention will be deteriorated, which is not preferable. If the amount of this calcium carbonate exceeds 80 parts by mass per 100 parts by mass of the above-mentioned rubber component, the communication performance of the transponder cannot be improved, which is not preferable.

Furthermore, since the synergistic effect between calcium carbonate and carbon black is more easily enhanced in this coating rubber layer, it is more preferable that the mass ratio of carbon black to calcium carbonate (carbon black/calcium carbonate) in this coating rubber layer is more than 0.05. This mass ratio is more preferably 0.10 or more, and even more preferably 0.15 or more. The upper limit is more preferably 5.0 or less, even more preferably 2.0 or less, even more preferably 1.5 or less, even more preferably 1.0 or less, and even more preferably less than 1.0.

Oil

The oil contained in this coating rubber layer is also not particularly limited, and any known oil (process oil, vegetable oil, and the like) used for applications such as tires can be used. For example, specific examples of oil include petroleum-derived oil and natural-product-derived oil (wood-derived oil, and the like). An example of a petroleum-derived oil is TDAE (Treated Distillate Aromatic Extract) oil (a product of Shell Lubricants Japan Co., Ltd), and an example of a wood-derived oil is pine-derived tall oil (oil obtained during the manufacture of kraft pulp, a product of Harima Chemical Group Co., Ltd), but the oils are not limited to these. The oils may be used alone or in combination of two or more types.

The coating rubber layer preferably contains 1 to 30 parts by mass of the oil per 100 parts by mass of the rubber component contained in the coating rubber layer. Moreover, the amount of the oil is more preferably 5 parts by mass or more per 100 parts by mass of the rubber component. The upper limit is more preferably 20 parts by mass or less, and even more preferably 10 parts by mass or less.

The coating rubber layer preferably contains a vulcanizing agent (for example, sulfur). The coating rubber layer is preferably a vulcanized coating rubber layer. The coating rubber layer may further contain, as optional components, within the range that does not significantly affect the effects of the present invention, appropriate amounts of various additives generally used in rubber compositions, such as resin components (terpene resin, coumarone resin, indene resin, rosin resin, and the like), zinc oxide (zinc white), stearic acid, wax, lecithin, antioxidants, plasticizers, vulcanization accelerators, and vulcanization accelerator assistants.

For example, the content of stearic acid, zinc white, and resin components in the coating rubber layer is preferably 1 to 5 parts by mass per 100 parts by mass of the rubber component contained in the coating rubber layer. The content of sulfur in the coating rubber layer is preferably 2 to 6 parts by mass per 100 parts by mass of the rubber component contained in the coating rubber layer. Furthermore, the content of the vulcanization accelerator in the coating rubber layer, either as a primary accelerator alone or as a blend with a secondary accelerator, is preferably 0.3 to 3.0 parts by mass, more preferably 0.5 to 2.0 parts by mass, per 100 parts by mass of the rubber component contained in the coating rubber layer.

The layer thickness of the coating rubber layer in the region coating the transponder is not limited, but is preferably 0.3 to 1.5 mm, since the effects of the present invention are more easily achieved. Here, the "layer thickness of the coating rubber layer in the region coating the transponder" refers to the layer thickness of each coating rubber layer in the region coating the transponder among the coating rubber layers included in the multilayer structure for a tire of the present invention. In the case of the configuration in which the transponder 31 is sandwiched between two coating rubber layers 21 as in embodiment shown in FIG. 1, the thickness does not mean the total thickness of the two layers, but means the thickness of each of the coating rubber layers 21 in the region coating the transponder 31 (the layer thickness on a straight line connecting the transponder 31 and one of the outer surfaces of the coating rubber layers 21 and perpendicular to this outer surface: T1, T2).

Adjacent Rubber Layer

The multilayer structure for a tire of the present invention further includes an adjacent rubber layer layered adjacent to at least one surface of the coating rubber layer described above. For example, an embodiment of a multilayer structure of five or more layers in which adjacent rubber layers 11 are layered adjacent to both surfaces of the coating rubber layer 21 coating the transponder 31 as shown in FIG. 1, an embodiment of a multilayer structure of four or more layers in which adjacent rubber layers 11 are layered adjacent to one surface (one side) of the coating rubber layer 21 coating the transponder 31 (for example, a configuration in which any one of the adjacent rubber layers 11 is not layered in FIG. 1), and the like are exemplified. The thickness of the adjacent rubber layer is not particularly limited.

Here, "layered adjacent to" means that the layer is layered without disposing any other layer, including layers other than the rubber layer such as an adhesive layer, between the coating rubber layer and the coating rubber layer. Furthermore, "adjacent to at least one surface of the coating rubber layer" means that the layer is adjacent to at least one surface of the front surface or the back surface of the coating rubber layer that is layered to coat the entire surface of the transponder so as to sandwich both the front and back surfaces of the transponder.

The adjacent rubber layer is not particularly limited in terms of other compounding components as long as it contains a rubber component, but may contain the same components as the coating rubber layer described above. Furthermore, the adjacent rubber layer may also be configured to contain organic fibers (for example, organic fiber cords such as polyester and nylon), metals (for example, steel cords), and the like. The rubber component may also be the same as that of the coating rubber layer described above. Furthermore, it is preferable that the adjacent rubber layer is also a vulcanized adjacent rubber layer. In the multilayer structure for a tire of the present invention, the carbon black content of the adjacent rubber layer is not limited as long as the carbon black content of the coating rubber layer is within the range described above. The adjacent rubber layer may further contain an inorganic filler other than carbon black. Examples of such inorganic fillers include the aforementioned calcium carbonate, silica, magnesium carbonate, clay, mica, talc, alumina, aluminum hydroxide, titanium oxide, calcium sulfate, and barium sulfate.

For example, the content of the carbon black in the adjacent rubber layer is preferably 20 to 100 parts by mass per 100 parts by mass of the rubber component contained in the adjacent rubber layer. The content of stearic acid, zinc oxide, and resin component in the adjacent rubber layer is preferably 1 to 5 parts by mass per 100 parts by mass of the rubber component contained in the adjacent rubber layer. Furthermore, the content of sulfur in the adjacent rubber layer is preferably 2 to 6 parts by mass per 100 parts by mass of the rubber component contained in the adjacent rubber layer. The content of the vulcanization accelerator in the adjacent rubber layer is preferably 0.3 to 3.0 parts by mass, and more preferably 0.5 to 2.0 parts by mass, either as a primary accelerator alone or as a blend with a secondary accelerator, per 100 parts by mass of the rubber component contained in the adjacent rubber layer.

In addition, the adjacent rubber layer preferably contains oil from the viewpoint of easily improving the durability of the multilayer structure for a tire of the present invention. The oil may be the same as that of the coating rubber layer described above. The adjacent rubber layer preferably contains 1 to 30 parts by mass of this oil per 100 parts by mass of the rubber component contained in the adjacent rubber layer. Moreover, the amount of this oil is more preferably 5 parts by mass or more per 100 parts by mass of the above-mentioned rubber component. The upper limit is more preferably 20 parts by mass or less, and even more preferably 15 parts by mass or less.

Ratio of Oil Extraction Amount

The multilayer structure for a tire of the present invention is further configured so that an oil extraction amount (O1) of the coating rubber layer and an oil extraction amount (O2) of the adjacent rubber layer satisfy the relationship of Formula (1). As a result, oil migration is less likely to occur between the coating rubber layer and the adjacent rubber layer during manufacture (for example, during vulcanization press) and after manufacture, and the like, and the durability of the multilayer structure can be maintained at a high level.

$$(1)\ 0.5 \leq O1/O2 \leq 2.0$$

The lower limit of Formula (1) is more preferably 0.8 or more, and even more preferably 1.0 or more, since the effects of the present invention are more easily achieved. The upper limit is more preferably 1.8 or less, and even more preferably 1.6 or less. For example, Formula (1) may be $0.8 \le O1/O2 \le 1.8$, or $1.0 \le O1/O2 \le 1.6$.

The oil extraction amount of the coating rubber layer and the oil extraction amount of the adjacent rubber layer are both values measured by a Soxhlet extraction method using acetone as an extraction solvent. Even if the adjacent rubber layer does not contain oil, the oil extraction amount (O2) is measured by the above method, although it is small. Therefore, the adjacent rubber layer may be configured not to contain oil.

The tire of the present invention having a predetermined transponder embedded therein can be obtained by using such a multilayer structure for a tire of the present invention. For example, a transponder coated with a predetermined coating rubber layer is embedded extending along the tire circumferential direction between a carcass layer (a layer including cords forming the framework of a tire) and an innerliner layer (a layer corresponding to a tube), both of which have a predetermined oil extraction amount, and an unvulcanized tire is manufactured including the multilayer structure of the above-mentioned configuration, and the tire of the present invention including the multilayer structure for a tire of the present invention can be manufactured by vulcanizing (for example, vulcanization pressing) the unvulcanized tire. However, the embedding position of the transponder is not limited to this, and the transponder can be arbitrarily positioned as long as it does not deteriorate the function of the tire. Alternatively, It may also be positioned so that one surface of the coating rubber layer is exposed.

The tire of the present invention is preferably a pneumatic tire. The gas to be filled in the pneumatic tire can be, for example, air, inert gas such as nitrogen, argon, helium, and other gases.

The multilayer structure for a tire of the present invention and the tire of the present invention, which are configured as described above, are excellent in both the communication performance of the embedded transponder and the durability of the multilayer structure (that is, the durability of the tire).

Hereinafter, Examples of the present invention will be described, but the present invention is not limited to the following examples, and various modifications can be made within the technical concept of the present invention.

Example

Manufacture and Evaluation of Tire

A tire was manufactured that includes a multilayer structure as shown in FIG. 1, using a transponder (RFID tag) which has an IC board and antennas provided at both end portions of the IC board, and in which a linear distance between the terminals of the antennas is about 55 mm, a coating rubber layer having the composition shown in the upper part of Table 2 or the upper part of Table 3 below, and an adjacent rubber layer having the composition shown in Table 1 below.

Specifically, first, a mixed rubber was formed using the components (excluding sulfur and vulcanization accelerator) in parts by mass shown in the upper part of Table 2 and the upper part of Table 3 below, and then the sulfur and vulcanization accelerator shown in the upper part of Table 2 or the upper part of Table 3 below were mixed with the mixed rubber and molded into a predetermined sheet shape to manufacture an unvulcanized rubber sheet (coating rubber layer). The transponder described above was then coated with one of these rubber sheets as shown in Figure 1. Furthermore, a mixed rubber was formed using the components (excluding sulfur and vulcanization accelerator) in parts by mass shown in Table 1 below, and then the sulfur and vulcanization accelerator shown in Table 1 below were mixed with the mixed rubber and molded into a predetermined sheet shape to manufacture an unvulcanized rubber sheet (adjacent rubber layer). These rubber sheets were then layered to form the multilayer structures shown in Tables 2 and 3 below, and unvulcanized tires were formed so that the transponder was disposed between the carcass layer and the innerliner layer, which were then vulcanized under the conditions of a vulcanization temperature of 185°C, a vulcanization time of 15 minutes, and a pressure of 2.3 MPa, to manufacture tires (pneumatic radial tires) of Examples 1 to 12 and Comparative Examples 1 to 23.

The oil extraction amount (O2) of the adjacent rubber layer and the oil extraction amount (O1) of the coating rubber layer were both measured by a Soxhlet extraction method using acetone as an extraction solvent.

Then, for the tires of Examples 1 to 12 and Comparative Examples 1 to 23 thus obtained, the transponder communication performance and tire durability were evaluated as follows.

Communication Performance

For each tire, a communication operation with the transponder was performed using a reader/writer. Specifically, the maximum communication distance was measured with the reader/writer at a power output of 250 mW and a carrier frequency of from 860 MHz to 960 MHz. Evaluation results are expressed as index values with Comparative Example 1 being assigned an index value of 100. Larger index values indicate superior communication performance.

Durability

Each tire was mounted on a wheel of a standard rim, the wheel was mounted on a test vehicle, and a travel test of driving over a curb having a height of 100 mm was performed at an air pressure of 230 kPa and a traveling speed of 20 km/h. After traveling, the portion of the tire outer surface corresponding to the arrangement section for the transponder was checked for damage. This test was conducted multiple times, and the evaluation results were expressed as index values with Comparative Example 1 being assigned an index value of 100 for the number of times damage occurred. Larger index values indicate superior durability.

[Table 1]

|  | A | B | C | D | E | F |
|---|---|---|---|---|---|---|
| NR | 50 | 50 | 50 | 50 | 50 | 50 |
| SBR | 50 | 50 | 50 | 50 | 50 | 50 |
| Carbon black | 60 | 60 | 60 | 60 | 60 | 60 |
| Oil | 0 | 2 | 4 | 6 | 8 | 10 |
| Zinc oxide | 3 | 3 | 3 | 3 | 3 | 3 |
| Stearic acid | 2 | 2 | 2 | 2 | 2 | 2 |
| Terpene resin | 2 | 2 | 2 | 2 | 2 | 2 |
| Sulfur | 4 | 4 | 4 | 4 | 4 | 4 |
| Vulcanization accelerator | 1 | 1 | 1 | 1 | 1 | 1 |
| Oil extraction amount (O2) | 0.01 | 0.02 | 0.03 | 0.04 | 0.06 | 0.07 |

[Table 2]

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Example 1 | Example 2 | Example 3 | Comparative Example 12 | Comparative Example 13 | Comparative Example 14 |
|---|---|---|---|---|---|---|---|---|---|---|---|---|---|---|---|---|---|
| NR | 50 | 50 | 50 | 50 | 50 | 50 | 50 | 50 | 50 | 50 | 50 | 50 | 50 | 50 | 50 | 50 | 50 |
| SBR | 50 | 50 | 50 | 50 | 50 | 50 | 50 | 50 | 50 | 50 | 50 | 50 | 50 | 50 | 50 | 50 | 50 |
| Carbon black | 20 | 0 | 0 | 0 | 1 | 1 | 1 | 4 | 4 | 4 | 20 | 15 | 15 | 15 | 15 | 15 | 15 |
| Calcium carbonate 1 | - | - | - | - | - | - | - | - | - | - | - | 10 | 10 | 10 | 10 | 10 | 10 |
| Calcium carbonate 2 | - | - | - | - | - | - | - | - | - | - | - | - | - | - | - | - | - |
| Oil | 8 | 8 | 8 | 8 | 8 | 8 | 8 | 8 | 8 | 8 | 8 | 8 | 8 | 8 | 8 | 8 | 8 |
| Zinc oxide | 3 | 3 | 3 | 3 | 3 | 3 | 3 | 3 | 3 | 3 | 3 | 3 | 3 | 3 | 3 | 3 | 3 |
| Stearic acid | 2 | 2 | 2 | 2 | 2 | 2 | 2 | 2 | 2 | 2 | 2 | 2 | 2 | 2 | 2 | 2 | 2 |
| Terpene resin | 2 | 2 | 2 | 2 | 2 | 2 | 2 | 2 | 2 | 2 | 2 | 2 | 2 | 2 | 2 | 2 | 2 |
| Sulfur | 4 | 4 | 4 | 4 | 4 | 4 | 4 | 4 | 4 | 4 | 4 | 4 | 4 | 4 | 4 | 4 | 4 |
| Vulcanization accelerator | 1 | 1 | 1 | 1 | 1 | 1 | 1 | 1 | 1 | 1 | 1 | 1 | 1 | 1 | 1 | 1 | 1 |
| Adjacent rubber layer | A | A | C | E | A | C | E | A | C | E | C | E | F | D | B | C | A |
| O1/O2 | 6.1 | 7.2 | 2.4 | 1.5 | 7.1 | 2.4 | 1.5 | 6.4 | 2.2 | 1.3 | 2.1 | 1.3 | 1.1 | 1.6 | 3.2 | 2.2 | 6.4 |
| Communication performance | 100 | 112 | 112 | 112 | 112 | 112 | 112 | 107 | 107 | 107 | 100 | 107 | 107 | 107 | 107 | 107 | 107 |
| Durability | 100 | 71 | 71 | 86 | 73 | 73 | 87 | 86 | 86 | 100 | 100 | 143 | 143 | 143 | 100 | 100 | 100 |

[Table 3]

| | Example 4 | Comparative Example 15 | Comparative Example 16 | Example 5 | Example 6 | Comparative Example 17 | Example 7 | Comparative Example 18 | Comparative Example 19 | Comparative Example 20 | Example 8 | Example 9 | Comparative Example 21 | Comparative Example 22 | Comparative Example 23 | Example 10 | Example 11 | Example 12 |
|---|---|---|---|---|---|---|---|---|---|---|---|---|---|---|---|---|---|---|
| NR | 50 | 50 | 50 | 50 | 50 | 50 | 50 | 50 | 50 | 50 | 50 | 50 | 50 | 50 | 50 | 50 | 50 | 50 |
| SBR | 50 | 50 | 50 | 50 | 50 | 50 | 50 | 50 | 50 | 50 | 50 | 50 | 50 | 50 | 50 | 50 | 50 | 50 |
| Carbon black | 15 | 15 | 15 | 15 | 15 | 15 | 15 | 15 | 15 | 15 | 15 | 15 | 15 | 15 | 15 | 15 | 5 | 10 |
| Calcium carbonate 1 | 40 | 40 | 40 | 40 | 40 | 40 | 80 | 80 | 80 | 80 | 80 | 80 | 100 | 100 | 100 | - | 10 | 10 |
| Calcium carbonate 2 | - | - | - | - | - | - | - | - | - | - | - | - | - | - | - | 10 | - | - |
| Oil | 8 | 8 | 8 | 8 | 8 | 8 | 8 | 8 | 8 | 8 | 8 | 8 | 8 | 8 | 8 | 8 | 8 | 8 |
| Zinc oxide | 3 | 3 | 3 | 3 | 3 | 3 | 3 | 3 | 3 | 3 | 3 | 3 | 3 | 3 | 3 | 3 | 3 | 3 |
| Stearic acid | 2 | 2 | 2 | 2 | 2 | 2 | 2 | 2 | 2 | 2 | 2 | 2 | 2 | 2 | 2 | 2 | 2 | 2 |
| Terpene resin | 2 | 2 | 2 | 2 | 2 | 2 | 2 | 2 | 2 | 2 | 2 | 2 | 2 | 2 | 2 | 2 | 2 | 2 |
| Sulfur | 4 | 4 | 4 | 4 | 4 | 4 | 4 | 4 | 4 | 4 | 4 | 4 | 4 | 4 | 4 | 4 | 4 | 4 |
| Vulcanization accelerator | 1 | 1 | 1 | 1 | 1 | 1 | 1 | 1 | 1 | 1 | 1 | 1 | 1 | 1 | 1 | 1 | 1 | 1 |
| Adjacent rubber layer | E | C | A | F | D | B | E | C | A | B | D | F | E | C | A | E | F | F |
| O1/O2 | 1.3 | 2.2 | 6.4 | 1.1 | 1.6 | 3.2 | 1.3 | 2.2 | 6.4 | 3.2 | 1.6 | 1.1 | 1.3 | 2.2 | 6.4 | 1.3 | 1.1 | 1.1 |
| Communication performance | 106 | 106 | 106 | 106 | 106 | 106 | 103 | 103 | 103 | 103 | 103 | 103 | 100 | 100 | 100 | 107 | 107 | 107 |
| Durability | 144 | 100 | 100 | 110 | 143 | 100 | 147 | 100 | 95 | 100 | 144 | 144 | 150 | 100 | 100 | 150 | 143 | 143 |

The detailed contents of each component and the like in Tables 1 to 3 are as follows.

- NR: Natural rubber (STR 20, available from Von Bundit Co., Ltd.)
- SBR: Styrene-butadiene copolymer rubber (Nipol 1502, available from ZEON CORPORATION)
- Carbon black: Nitelon #55S (GPF, nitrogen adsorption specific surface area ($N_2SA$): 26 $m^2/g$, DBP absorption amount: 88 mL/100 g, average particle size: 56 $\mu$m, available from NSCC Carbon Co., Ltd.)
- Oil: Extract 4S (TDAE oil, available from Shell Lubricants Japan K.K.)
- Zinc oxide: Zinc oxide (ZnO, available from Seido Chemical Industry Co., Ltd)
- Stearic acid: Stearic acid YR (available from NOF Corporation)
- Terpene resin: Tackifier (available from Yasuhara Chemical Co., Ltd.)
- Sulfur: Myucron OT-20 (available from SHIKOKU CHEMICALS CORPORATION)
- Vulcanization accelerator: Noccela NS-P (available from Ouchi Shinko Chemical Industry Co., Ltd)
- Calcium carbonate 1: Light calcium carbonate (no surface treatment, available from Maruo Calcium Co., Ltd)
- Calcium carbonate 2: MSK-V (light calcium carbonate surface-treated with fatty acid metal salt, available from Maruo Calcium Co., Ltd)
- Oil extraction amount (O2): Oil extraction amount (O2) of adjacent rubber layer
- O1/O2: Oil extraction amount (O1) of coating rubber layer/Oil extraction amount (O2) of adjacent rubber layer

From these results, it was shown that by making a tire containing a multilayer structure in which a predetermined amount of carbon black, a predetermined amount of calcium carbonate, and oil are contained in the coating rubber layer that coats a predetermined transponder, and the ratio of the oil extraction amount of this coating rubber layer to the oil extraction amount of the adjacent rubber layer is within a predetermined range, a transponder-embedded tire excellent in the communication performance of the transponder and the durability of the tire (durability of multilayer structure for a tire) is obtained.

In addition, the tire durability was not improved in Comparative Examples 1 to 11, in which the coating rubber layer does not contain calcium carbonate, and the tire durability was not improved in Comparative Examples 1 to 3, 5 to 6, 8 to 9, 11 to 20, and 22 to 23, in which O1/O2 was not within the predetermined range. Furthermore, the communication performance of the transponder was not improved in Comparative Examples 1 and 11, in which the carbon black content of the coating rubber layer was higher than the predetermined amount, and Comparative Examples 21 to 23, in which the calcium carbonate content of the coating rubber layer was higher than the predetermined amount.

This application is based upon and claims the benefit of priority from Japanese patent application No. 2023/053358, filed on March 29, 2023, the disclosure of which is incorporated herein in its entirety by reference.

Reference Signs List

| | |
|---|---|
| 100 | Multilayer structure for a tire (partial cross-section of tire) |
| 11 | Adjacent rubber layer |
| 21 | Coating rubber layer |
| 31 | Transponder |
| 33 | IC board |
| 35 | Antenna |
| 35a | Antenna terminal |
| L | Linear distance between terminals of antenna |
| T1, T2 | Layer thickness of coating rubber layer |

**Claims**

1. A multilayer structure for a tire comprising:

    a transponder;
    a coating rubber layer that coats the transponder; and
    an adjacent rubber layer layered adjacent to at least one surface of the coating rubber layer,
    the transponder comprising an IC board and antennas provided at both end portions of the IC board,
    a linear distance between terminals of the antennas provided at both end portions of the IC board being 30 mm or more and 60 mm or less,
    the coating rubber layer containing a rubber component, carbon black, calcium carbonate, and oil, and containing 1 to 15 parts by mass of the carbon black and 1 to 80 parts by mass of the calcium carbonate per 100 parts by mass of the rubber component, and
an oil extraction amount (O1) of the coating rubber layer and an oil extraction amount (O2) of the adjacent rubber layer satisfying a relationship of Formula (1).

$$(1) \ 0.5 \leq O1/O2 \leq 2.0$$

2. The multilayer structure for a tire according to claim 1, wherein the calcium carbonate contained in the coating rubber layer is calcium carbonate surface-treated with a fatty acid metal salt.

3. The multilayer structure for a tire according to claim 1 or 2, wherein the coating rubber layer contains 5 to 15 parts by mass of the carbon black per 100 parts by mass of the rubber component.

4. The multilayer structure for a tire according to claim 1 or 2, wherein the carbon black contained in the coating rubber layer is carbon black having a nitrogen adsorption specific surface area ($N_2SA$) of 20 to 50 $m^2$/g and a DBP absorption amount of less than 100 mL/100 g.

5. The multilayer structure for a tire according to claim 1 or 2, wherein a mass ratio (carbon black/calcium carbonate) of the carbon black to the calcium carbonate in the coating rubber layer is greater than 0.05.

6. A tire comprising the multilayer structure for a tire according to claim 1 or 2.

100

35    33    35    31

11

21

T1

21

T2

11

35a    L    35a

# FIG. 1

## INTERNATIONAL SEARCH REPORT

| International application No. |
| --- |
| **PCT/JP2024/009963** |

| | |
| --- | --- |
| **A.** | **CLASSIFICATION OF SUBJECT MATTER** |

***B60C 19/00***(2006.01)i; ***B60C 1/00***(2006.01)i; ***H04B 1/59***(2006.01)i
FI: B60C19/00 J; B60C1/00 Z; H04B1/59

According to International Patent Classification (IPC) or to both national classification and IPC

| | |
| --- | --- |
| **B.** | **FIELDS SEARCHED** |

Minimum documentation searched (classification system followed by classification symbols)

B60C1/00-19/12; H04B1/59

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2021-129302 A (THE YOKOHAMA RUBBER CO., LTD.) 02 September 2021 (2021-09-02)<br>entire text | 1-6 |
| A | JP 2022-129748 A (SUMITOMO RUBBER INDUSTRIES, LTD.) 06 September 2022 (2022-09-06)<br>entire text | 1-6 |
| A | JP 2023-2064 A (THE YOKOHAMA RUBBER CO., LTD.) 10 January 2023 (2023-01-10)<br>entire text | 1-6 |
| A | JP 2019-502769 A (BRIDGESTONE AMERICAS TIRE OPERATIONS, LLC) 31 January 2019 (2019-01-31)<br>entire text | 1-6 |
| A | JP 2023-41496 A (BRIDGESTONE CORPORATION) 24 March 2023 (2023-03-24)<br>entire text | 1-6 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 May 2024** | **11 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/009963**

| Patent document cited in search report | | | Publication date (day/month/year) | Patent family member(s) | | | Publication date (day/month/year) |
|---|---|---|---|---|---|---|---|
| JP | 2021-129302 | A | 02 September 2021 | (Family: none) | | | |
| JP | 2022-129748 | A | 06 September 2022 | EP entire text | 4296313 | A1 | |
| | | | | WO | 2022/181269 | A1 | |
| | | | | CN | 116887994 | A | |
| JP | 2023-2064 | A | 10 January 2023 | WO | 2022/270338 | A1 | |
| | | | | CN | 117440886 | A | |
| JP | 2019-502769 | A | 31 January 2019 | US entire text | 2019/0054781 | A1 | |
| | | | | WO | 2017/083251 | A1 | |
| | | | | EP | 3374452 | A1 | |
| | | | | CN | 108699376 | A | |
| JP | 2023-41496 | A | 24 March 2023 | WO | 2023/037659 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H7137510 A

- JP 2023053358 A